# EUROPEAN PATENT SPECIFICATION

(11) **EP 4 047 236 B1**
(45) Date of publication and mention of the grant of the patent: **15.01.2025**
(21) Application number: 20876905.9
(22) Date of filing: 14.10.2020
(51) Int. Cl.: F16D 27/112, F16H 55/36, F16D 27/06

(54) **ELECTROMAGNETIC CLUTCH**
ELEKTROMAGNETISCHE KUPPLUNG
EMBRAYAGE ÉLECTROMAGNÉTIQUE

(30) Priority: 17.10.2019 JP 2019190161
(43) Date of publication of application: 24.08.2022
(73) Proprietor: Valeo Japan Co., Ltd., Kumagaya-Shi SAITAMA 360-0193 (JP)
(72) Inventor: YAMADA, Sachihiro, Kumagaya-shi Saitama 360-0193 (JP); SHIMIZU, Atsushi, Kumagaya-shi Saitama 360-0193 (JP); HIRANO, Ichiro, Kumagaya-shi Saitama 360-0193 (JP); OHK, Changheon, Kumagaya-shi Saitama 360-0193 (JP)
(74) Representative: Valeo Systèmes Thermiques
(86) International application number: PCT/JP2020/038695
(87) International publication number: WO 2021/075443

(56) References cited:
- CN-U- 203 614 622
- DE-A1- 102011 104 130
- DE-A1- 102018 107 061
- JP-A- 2005 180 474
- JP-A- 2009 281 579
- JP-A- S57 120 731
- JP-A- S57 120 731
- JP-U- S61 523

## Description

### Technical Field

The present invention relates to an electromagnetic clutch used to intermittently interrupt a rotational force transmitted from a rotational force source such as an engine and a motor to a compressor for a vehicle air conditioner, and more particularly to an electromagnetic clutch adapted to increase a rotation speed of the compressor.

### Background Art

For example, as disclosed in PTL 1, a general electromagnetic clutch used in a compressor for a vehicle air conditioner includes: a rotor that is rotatably fitted, via a bearing, on an outer periphery of a cylindrical portion of a housing supporting a drive shaft and that rotates by receiving a rotational force from a rotational force source such as an engine or a motor; a hub that is unrotatably coupled to the drive shaft and that rotates together with the drive shaft; an armature plate that is coupled to the hub and that faces a side end surface of the rotor with a slight gap between the armature plate and the side end surface; and an excitation coil accommodated in the inside of an annular space of the rotor. A pulley on which a belt transmitting the rotational force from the rotational force source is to be wound is disposed on an outer peripheral side of the rotor of the electromagnetic clutch disclosed in PTL 1, and the rotor and the pulley are integrally formed.

In recent years, in order to increase a rotational speed of a compressor to improve the cooling capacity of a vehicle air conditioner, it is required to reduce a diameter of a pulley of an electromagnetic clutch to change a pulley ratio. However, similar to the electromagnetic clutch disclosed in PTL 1, when the pulley is disposed on the outer peripheral side of the rotor, a diameter of the pulley is large because the rotor is disposed on an inner side of the pulley. Therefore, there is a disadvantage that it is difficult to meet the request of reducing the diameter of the pulley of the electromagnetic clutch to change the pulley ratio. For such a disadvantage, one may conceive of separating the pulley from the rotor, making the pulley protrude toward a front side with respect to the armature plate, and not providing the rotor in the inner side of the pulley, to thereby reduce the diameter of the pulley of the electromagnetic clutch.

### Citation List

### Patent Literature

PTL 1: JP-A-2006-292010. See also JP S57 120731, CN203 614 622 U and DE 10 2011 104130.

### Summary of Invention

### Technical Problem

However, if an electromagnetic clutch is configured such that the pulley is distinct from the rotor and the small-diameter pulley portion is formed by making the pulley protrude toward the front side with respect to the armature plate, a step is formed such that an opening of the small-diameter pulley portion is small and a diameter of the small-diameter pulley portion on a rotor side is large. Therefore, when foreign substances such as water, contaminants, and dust enter the inner side of the pulley from the opening of the small-diameter pulley portion, the foreign substances are unlikely to be removed to the outside. Therefore, attracting surfaces of the armature plate and the rotor may rust, water may enter the bearing through the gap in the armature plate and the bearing may rust and become unable to rotate, or a problem may occur due to foreign substances that have entered the pulley.

The present invention has been made to solve the above problem, and an object of the present invention is to provide an electromagnetic clutch that prevents water and foreign substances from entering the electromagnetic clutch through an opening of a pulley even though the pulley is distinct from a rotor and the pulley protrudes toward a front side with respect to an armature plate in order to reduce a diameter of the pulley of the electromagnetic clutch to change a pulley ratio.

### Solution to Problem

In order to achieve the above object, an electromagnetic clutch according to claim 1 includes: a rotor rotatably supported by a housing of a compressor; a pulley that receives a rotational force from a rotational force source via a belt and that is relatively unrotatably coupled to the rotor to rotate integrally with the rotor; a hub that is relatively unrotatably coupled to a drive shaft of the compressor and that rotates together with the drive shaft; an armature plate that is coupled to the hub and that faces a side end surface of the rotor with a gap therebetween; and an excitation coil that is supported by the housing of the compressor, that is accommodated in an inside of the rotor, and that generates an electromagnetic attraction force between the armature plate and the rotor, in which the rotor is distinct from the pulley, the pulley is attached to the rotor from a front side, the pulley includes a small-diameter pulley portion protruding toward the front side with respect to the armature plate, and the small-diameter pulley portion is provided with a cover at an opening of the small-diameter pulley portion on an opposite side (the front side) to the rotor. The rotational force source is, for example, an engine or a motor of an automobile. The cover is used for preventing not only water but also foreign substances from entering the pulley from outside of the pulley, and the cover may be formed with a through hole capable of preventing the water and the foreign substances from entering the pulley to some extent. A pulley outer diameter of the small-diameter pulley portion is smaller than an outer diameter of a coupling portion of the small-diameter pulley portion with the rotor.

Accordingly, for example, even if the inside of an engine room is cleaned by a cleaning machine and water splashes on the compressor of a vehicle air conditioner, the cover prevents the water from entering the pulley. The cover further prevents the foreign substances from entering the pulley. Accordingly, it is possible to prevent water from entering the bearing through the gap in the armature plate, rusting the bearing, and causing the bearing to be unable to rotate, to prevent friction engagement surfaces of the armature plate and the rotor from rusting, and to prevent a problem due to the foreign substances entering the pulley.

In the electromagnetic clutch according to claim 2, the pulley includes a large-diameter pulley portion on an outer peripheral side of the rotor, the large-diameter pulley portion having a diameter larger than a diameter of the small-diameter pulley portion. For example, the small-diameter pulley portion and the large-diameter pulley are integrally coupled to each other by a coupling portion extending in a radial direction of the drive shaft. The pulley is attached to the rotor from the front side by fixing, by a fixing tool such as a bolt, the coupling portion of the pulley and a portion of the rotor that faces the coupling portion. A comparison between the diameter of the small-diameter pulley portion and the diameter of the large-diameter pulley portion may be, for example, a comparison between pulley outer diameters or a comparison between pulley nominal diameters.

In this way, the pulley of the electromagnetic clutch includes the small-diameter pulley portion and the large-diameter pulley portion, so that one electromagnetic clutch can be compatible with different pulley ratios.

In the electromagnetic clutch according to claim 3, the cover is formed integrally with the pulley. Accordingly, water and foreign substances are prevented from entering the pulley through a clearance formed during assembling the small-diameter pulley portion and the cover.

In the electromagnetic clutch according to claim 4, a discharge passage is formed in a portion where the rotor and the pulley abut against each other. The discharge passage may be formed in the rotor, or may be formed in the pulley. Accordingly, abrasion powder generated due to the relative rotation between the armature plate and the rotor that are frictionally engaged with each other can be discharged from the discharge passage to the outside of the compressor, and even if water enters the pulley, the water can be discharged from the discharge passage to the outside of the compressor. Advantageous Effects of Invention

As described above, according to the present invention, even if water splashes on the compressor of the vehicle air conditioner, the cover can prevent the water from entering the pulley. The cover can also prevent foreign substances from entering the pulley. Accordingly, it is possible to change the pulley ratio by reducing the diameter of the pulley of the electromagnetic clutch, and it is possible to prevent water from entering the bearing through the gap in the armature plate, rusting the bearing, and causing the bearing to be unable to rotate, to prevent the friction engagement surfaces of the armature plate and the rotor from rusting, and to prevent a problem due to the foreign substances entering the pulley. Brief Description of Drawings

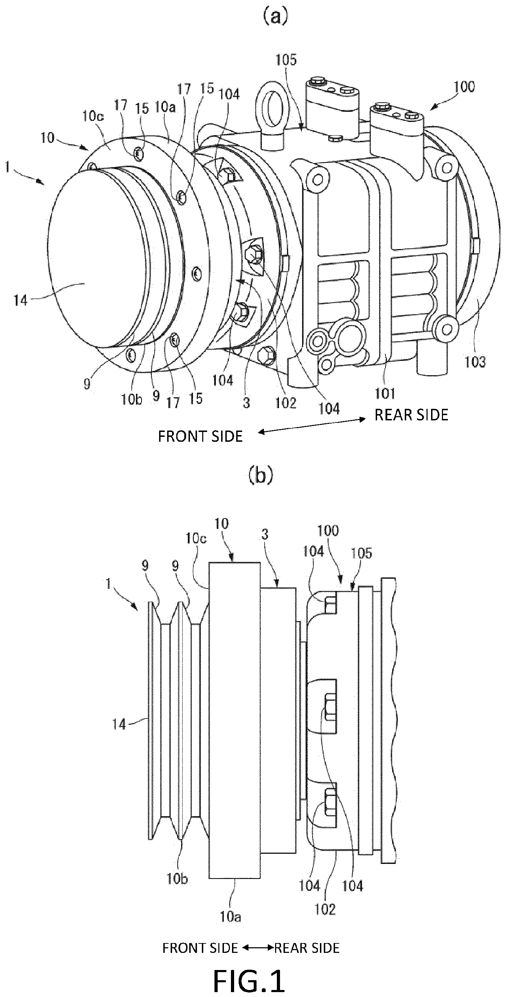

[FIG. 1] (a) of FIG. 1 is a perspective view of the entire structure of a compressor attached with an electromagnetic clutch according to a first example of the present invention, and (b) of FIG. 1 is a partially enlarged view showing that the electromagnetic clutch is attached to a front side of the compressor.

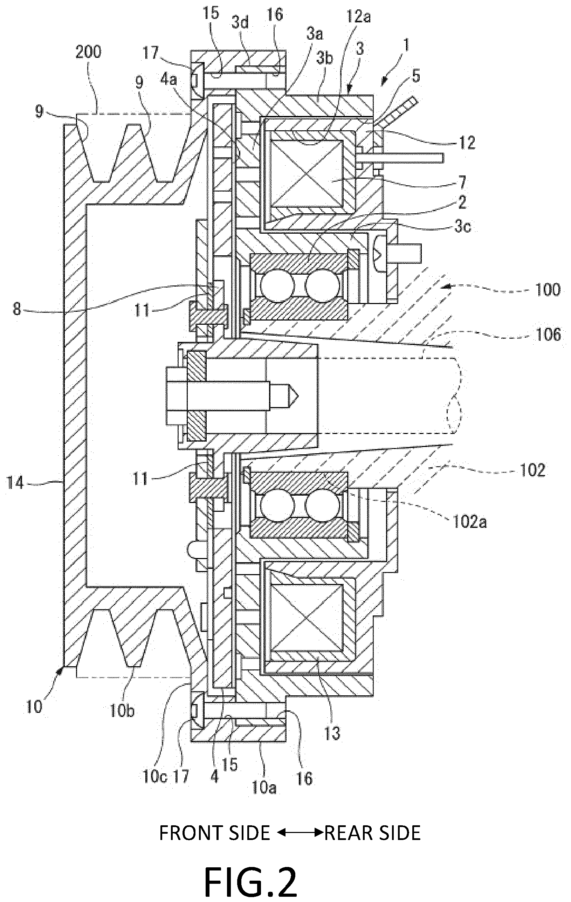

[FIG. 2] FIG. 2 is a cross-sectional view mainly showing a configuration of the electromagnetic clutch according to the first example of the present invention.

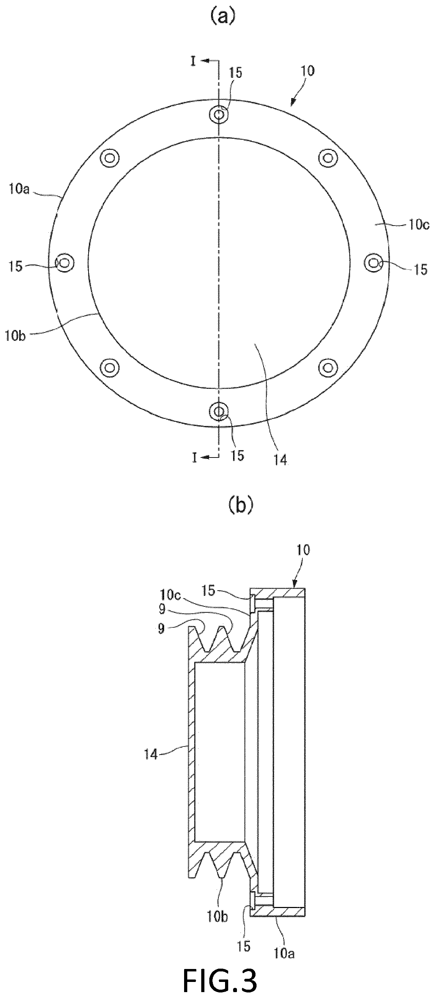

[FIG. 3] FIG. 3 is a schematic view showing a configuration of a pulley of the electromagnetic clutch according to the first example of the present invention, in which (a) of FIG. 3 is a front view of the pulley, and (b) of FIG. 3 is a cross-sectional view of the pulley in (a) of FIG. 3 taken along a line I-I.

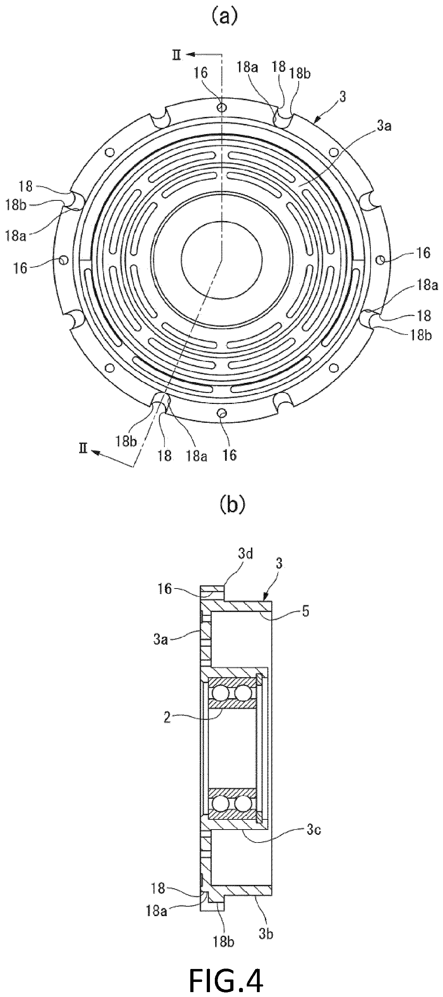

[FIG. 4] FIG. 4 is a schematic view showing a configuration of a rotor of an electromagnetic clutch according to the first example and a second example of the present invention, in which (a) of FIG. 4 is a front view of the rotor, and (b) of FIG. 4 is a cross-sectional view of the rotor in (a) of FIG. 4 taken along a line II-II.

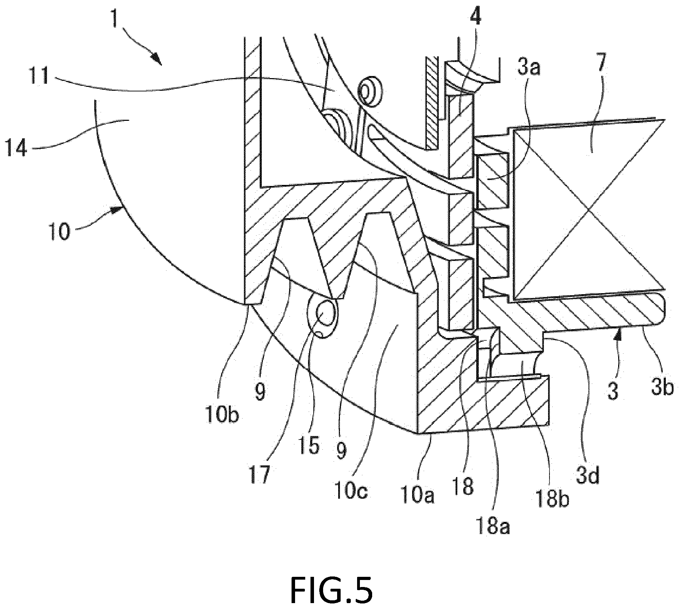

[FIG. 5] FIG. 5 is a partial cross-sectional view schematically showing a configuration of a discharge passage formed in the rotor according to the first example of the present invention.

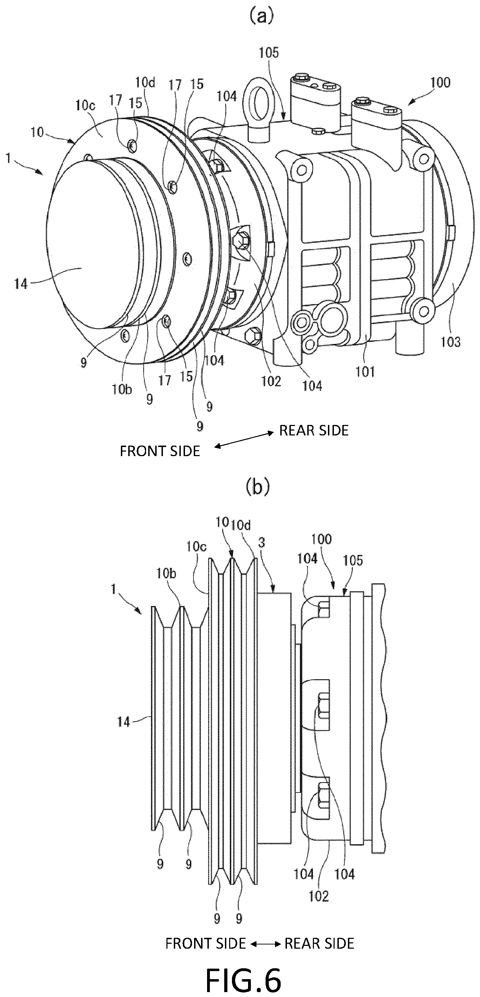

[FIG. 6] (a) of FIG. 6 is a perspective view of the entire structure of a compressor attached with the electromagnetic clutch according to the second example of the present invention, and (b) of FIG. 6 is a partially enlarged view showing that the electromagnetic clutch is attached to a front side of the compressor.

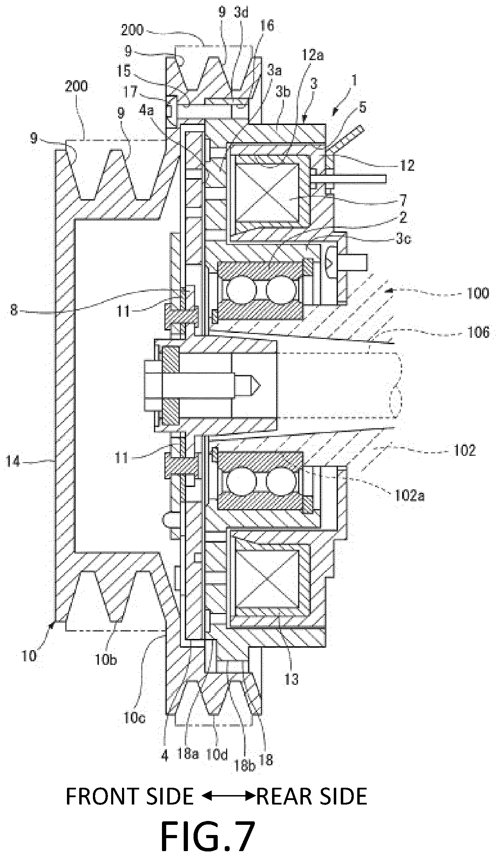

[FIG. 7] FIG. 7 is a cross-sectional view mainly showing a configuration of the electromagnetic clutch according to the second example of the present invention.

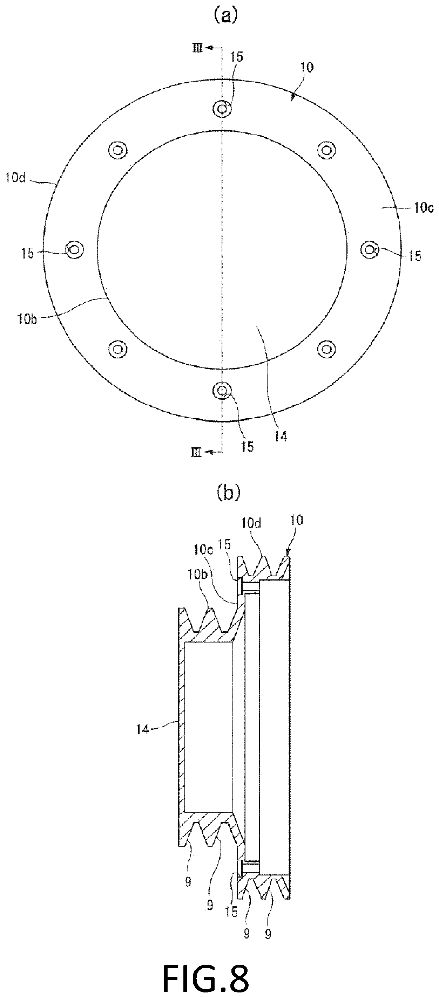

[FIG. 8] FIG. 8 is a schematic view showing a configuration of a pulley of the electromagnetic clutch according to the second example of the present invention, in which (a) of FIG. 8 is a front view of the pulley, and (b) of FIG. 8 is a cross-sectional view of the rotor in (a) of FIG. 8 taken along a line III-III.

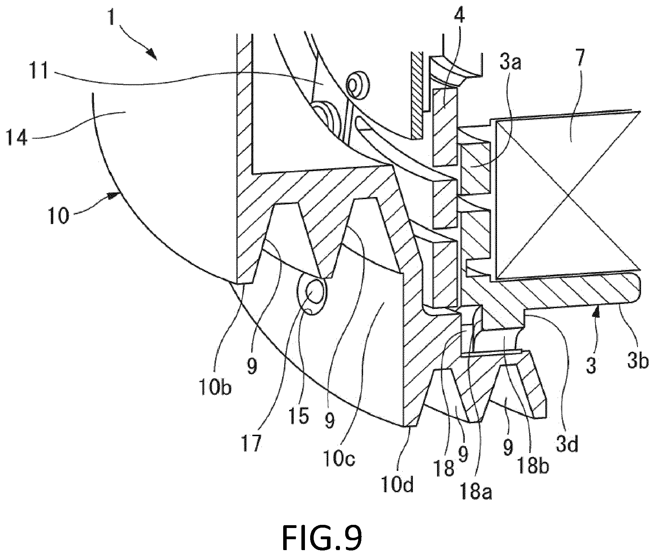

[FIG. 9] FIG. 9 is a partial cross-sectional view schematically showing a configuration of a discharge passage formed in the rotor according to the second example of the present invention.

### Description of Embodiments

Hereinafter, embodiments of the present invention will be described with reference to the accompanying drawings. First Example

A first example of the present invention will be described below with reference to FIGS. 1 to 5.

A compressor 100 shown in FIG. 1 (particularly, (a) of FIG. 1) is a refrigerant compressor for an air conditioner of a large-sized vehicle such as a bus or a track. It is noted that the type of the compressor according to the present invention is not limited to such a refrigerant compressor for an air conditioner of a large-sized vehicle. The present invention is also applicable to, for example, a compressor (not shown) constituting a refrigeration cycle of an air conditioner of a passenger vehicle. In FIG. 1, a left side of the figure is a front side, and a right side of the figure is a rear side.

The compressor 100 shown in (a) of FIG. 1 will be described as an example of a compressor attached with an electromagnetic clutch 1 according to the present invention, and includes a cylinder block 101, a front head 102 assembled to a front side of the cylinder block 101 via a valve plate, and a rear head 103 assembled to a rear side of the cylinder block 101 via a valve plate. The cylinder block 101, the front head 102, and the rear head 103 are fastened by fastening bolts 104 (only heads thereof are shown) along an axial direction thereof to form a housing 105 of the compressor 100.

A plurality of cylinder bores and a crank chamber (not shown) are defined in the cylinder block 101 of the housing 105. A drive shaft 106 (shown by a broken line in FIG. 2) passing through the crank chamber is rotatably supported in the cylinder block 101, so that an swash plate (not shown) disposed in the crank chamber is rotated by rotation of the drive shaft 106 to reciprocate double-head pistons (not shown) in the cylinder bores. As shown in FIG. 1 and FIG. 2, the electromagnetic clutch 1 is attached to one end of the drive shaft 106. In FIG. 2, a left side of the figure is the front side, and a right side of the figure is the rear side.

The electromagnetic clutch 1 is used to intermittently interrupt a rotational force transmitted from a rotational force source (not shown) such as an engine or a motor to the compressor 100. As shown in FIGS. 2, 3, and 4, the electromagnetic clutch 1 includes: a rotor 3 that is rotatably supported via a bearing 2 by a cylindrical portion 102a protruding from an end portion of the front head 102 around the drive shaft 106 of the compressor 100; an armature plate 4 that faces the rotor 3 with a slight gap therebetween in an axial direction and that is unrotatably fixed to the drive shaft 106; an excitation coil 7 that is supported by the housing 105 of the compressor 100, that is accommodated in the inside of the rotor 3, and that generates an electromagnetic attraction force between the armature plate 4 and the rotor 3; a hub 8 that is fixed to the drive shaft 106 of the compressor 100 and that rotates together with the drive shaft 106; and a pulley 10 that is formed with a plurality of V-shaped grooves 9 on which a belt 200 is to be wound and that transmits a rotational force from the rotational force source to the rotor 3 via the belt 200. In the first example, a flat spring mechanism 11 that biases the armature plate 4 in a direction away from the rotor 3 is used as a mechanism that prevents the armature plate 4 from coming into contact with the rotor 3 when the excitation coil 7 is not energized.

The rotor 3 is made of a magnetic material, is provided with the bearing 2 on an inner periphery of the rotor 3, and is rotatably mounted on an outer periphery of the cylindrical portion 102a via the bearing 2. The cylindrical portion 102a extends in a manner of inserting the drive shaft 106 thereinto from the front head 102 of the compressor 100. A disc-shaped friction wall 3a is formed on an opposite side (a front side) of the rotor 3 to the compressor 100, and a side end surface of the friction wall 3a is formed in a flat shape substantially perpendicular to an axial center of the rotor 3 and forms a friction surface facing the armature plate 4.

The armature plate 4 is formed of a magnetic material and has a disk shape. The armature plate 4 is coupled to the flat spring mechanism 11, and has a side end surface 4a facing the side end surface of the friction wall 3a of the rotor 3 with a slight gap therebetween. The side end surface 4a is formed in a flat shape substantially perpendicular to the axial center of the rotor 3, and forms a friction surface facing the rotor 3.

The excitation coil 7 is accommodated in a coil case 12. The coil case 12 is implemented by an annular iron container, has an annular groove 12a of which one end is opened, and accommodates the excitation coil 7 in the annular groove 12a. The annular groove 12a is filled with an epoxy resin material 13 to fix the excitation coil 7. The coil case 12 is attached to the front head 102 of the compressor 100.

The rotor 3 is provided with an outer peripheral wall 3b extending from the vicinity of an outer periphery of the friction wall 3a toward the rear side, and an inner peripheral wall 3c extending from the vicinity of an inner periphery of the friction wall 3a toward the rear side. The bearing 2 is fixed to an inner periphery of the inner peripheral wall 3c. An annular space 5 of which a rear side is opened is formed between the outer peripheral wall 3b and the inner peripheral wall 3c, and the annular space 5 accommodates, via a predetermined clearance, the coil case 12 accommodating the excitation coil 7. Accordingly, the rotor 3 is rotatable along the excitation coil 7 (the coil case 12) without being in sliding contact with the coil case 12.

In the electromagnetic clutch 1 according to the present invention, the rotor 3 is discrete from the pulley 10, particularly as shown in FIGS. 2, 3, and 4. Hereinafter, the rotor 3 and the pulley 10 will be described.

As shown in FIGS. 2 and 3, , the pulley 10 includes: a cylindrical portion 10a that has a cylindrical shape and that is disposed on the outer peripheral sides of the armature plate 4 and the rotor 3 when the electromagnetic clutch 1 is assembled to the compressor 100; a substantially cylindrical small-diameter pulley portion 10b protruding toward the front side (the front side of the drive shaft 106 in the axial direction) with respect to the armature plate 4; and a disc-shaped coupling portion 10c that couples an outer peripheral side of the small-diameter pulley portion 10b and an inner peripheral side of the cylindrical portion 10a. Further, a cover 14 is provided on an opening on the front side of the small-diameter pulley portion 10b.

The small-diameter pulley portion 10b has an outer diameter smaller than an outer diameter of the cylindrical portion 10a, and two V-shaped grooves 9 on which the belt 200 is to be wound are formed in the first example. The outer diameter of the small-diameter pulley portion 10b is at least smaller than that in a case in which the pulley portion is provided on the outer peripheral side of the rotor 3. Further, in the first example, the outer diameter of the small-diameter pulley portion 10b is smaller than the outer diameter of the rotor 3. A plurality of through holes 15 for coupling the rotor 3 by bolts 17 are disposed in the coupling portion 10c along a circumferential direction.

In the first example, the cover 14 has a thin plate shape, is formed integrally with the small-diameter pulley portion 10b, and closes the entire opening of the small-diameter pulley portion 10b. Alternatively, although not shown, the cover 14 may be distinct from the small-diameter pulley portion 10b and attached to an opening end of the small-diameter pulley portion 10b. A through hole (not shown) capable of preventing water or foreign substances from entering the small-diameter pulley portion 10b to some extent may be formed in the center of the small-diameter pulley portion 10b.

Accordingly, for example, even if the inside of an engine room of a large-sized vehicle such as a bus or a track is cleaned by a cleaning machine and water splashes on the compressor 100, the cover 14 prevents the water from entering the pulley 10. The cover 14 further prevents foreign substances such as contaminants and dust from entering the pulley 10. Therefore, it is possible to prevent water from entering the bearing 2 through the gap in the armature plate 4 and rusting the bearing 2 or rusting the side end surface (the friction surface) 4a of the armature plate 4 and the side end surface (the friction surface) of the friction wall 3a of the rotor 3.

As shown in FIGS. 2 and 4, the rotor 3 includes a flange portion 3d extending outward from the outer peripheral wall 3b. A rear side end surface of the coupling portion 10c of the pulley 10 abuts against a front side end surface of the flange portion 3d. Screw holes 16 through which the bolts 17 are inserted are formed in the flange portion 3d at positions corresponding to the through holes 15 of the coupling portion 10c of the pulley 10. Accordingly, the pulley 10 and the rotor 3 are assembled by inserting the bolts 17 into the through holes 15 and the screw holes 16 from the front side and screwing the bolts 17. Since the bolts 17 are attached from the front side in this way, even if the bolts 17 drop off, the bolts 17 do not fly outward.

Discharge passages 18 for discharging abrasion powder generated by relative rotation between the rotor 3 and the armature plate 4 that are frictionally engaged with each other by an electromagnetic attraction force are formed in a portion where the pulley 10 and the rotor 3 abut against each other. In the first example, as shown in FIGS. 4 and 5, the discharge passage 18 is formed between the screw hole 16 and the adjacent screw hole 16 in the flange portion 3d of the rotor 3.

The discharge passage 18 has a cutout portion 18a formed in the front side end surface of the flange portion 3d and a cutout portion 18b formed in an outer peripheral surface of the flange portion 3d. The cutout portion 18a has an opening in a surface of the flange portion 3d facing the armature plate 4, and extends from an outer edge of the rotor 3 toward a center side. The cutout portion 18b is disposed at a position corresponding to the cutout portion 18a when viewed from the axial direction of the drive shaft 106 and communicates with the cutout portion 18a, and a rear side of the cutout portion 18b reaches an end of the flange portion 3d. In the first example, a radial dimension that is a cutout depth of the cutout portion 18b is smaller than a radial dimension of the cutout portion 18a. The cutout portion 18a has an inner diameter dimension smaller than an inner diameter dimension of the abutting portion of the pulley 10. Accordingly, when the rotor 3 and the pulley 10 are assembled, a substantially L-shaped space is formed between the discharge passage 18 of the rotor 3 and an inner peripheral surface of the cylindrical portion 10a. The space opens toward an outer peripheral side of the armature plate 4, and an opposite side (a rear side) of the space to the armature plate 4 is opened to the outside. Accordingly, abrasion powder generated due to engaging and sliding between the rotor 3 and the armature plate 4 is discharged to the outside.

The example in which the discharge passage 18 is formed in the rotor 3 has been described as above and has been illustrated in FIGS. 4 and 5. The present invention is not limited thereto, and the discharge passage 18 may be formed in the pulley 10.

### Second Example

A second example of the present invention will be described below with reference to FIGS. 6 to 9 and 4. The same elements as those according to the first example, such as the compressor 100 shown in FIG. 6 and the rotor 3 of the electromagnetic clutch 1 shown in FIG. 4, are denoted by the same reference numerals as those according to the first example except for a case described below, and the description thereof will be omitted.

As shown in FIGS. 7, 8, and 4, the electromagnetic clutch 1 according to the second example includes: the rotor 3 that is rotatably supported via the bearing 2 by a cylindrical portion 102a protruding from an end portion of the front head 102 around the drive shaft 106 of the compressor 100; the armature plate 4 that faces the rotor 3 with a slight gap therebetween in an axial direction and that is unrotatably fixed to the drive shaft 106; the excitation coil 7 that is supported by a housing, that is accommodated in the inside of the rotor 3, and that generates an electromagnetic attraction force between the armature plate 4 and the rotor 3; the hub 8 that is fixed to the drive shaft 106 of the compressor 100 and that rotates together with the drive shaft 106; and the pulley 10 that is formed with the plurality of V-shaped grooves 9 on which the belt 200 is to be wound and that transmits the rotational force from the rotational force source to the rotor 3 via the belt 200. In the second example, the flat spring mechanism 11 that biases the armature plate 4 in the direction away from the rotor 3 is also used as the mechanism that prevents the armature plate 4 from coming into contact with the rotor 3 when the excitation coil 7 is not energized.

In the electromagnetic clutch 1 according to the second example, the rotor 3 is also distinct from the pulley 10. The rotor 3 of the electromagnetic clutch 1 according to the second example is the same as the rotor 3 of the electromagnetic clutch 1 according to the first example, including that the rotor 3 includes the discharge passage 18. Thus, the pulley 10 will be mainly described.

As shown in FIGS. 6 and 7, the pulley 10 includes: a large-diameter pulley portion 10d that is disposed on the outer peripheral sides of the armature plate 4 and the rotor 3 when the electromagnetic clutch 1 is assembled to the compressor 100; a substantially cylindrical small-diameter pulley portion 10b protruding toward the front side (the front side of the drive shaft 106 in the axial direction) with respect to the armature plate 4; and a disc-shaped coupling portion 10c that couples the outer peripheral side of the small-diameter pulley portion 10b and an inner peripheral side of the large-diameter pulley portion 10d. The cover 14 is provided at an opening on the opposite side (the front side) of the small-diameter pulley portion 10b to the coupling portion 10c.

The large-diameter pulley portion 10d is provided in an alternative form to the cylindrical portion 10a according to the first example, the large-diameter pulley portion 10d is formed with the two V-shaped grooves 9 on which the belt 200 is to be wound in the second example, and a pulley outer diameter of the large-diameter pulley portion 10d is larger than a pulley outer diameter of the small-diameter pulley portion 10b. Accordingly, for example, the belt 200 interlocking with a driving portion of the engine may be wound on the small-diameter pulley portion 10b, and the belt 200 interlocking with an alternator or the like may be wound on the large-diameter pulley portion 10d.

Similar to the first example, the cover 14 is formed integrally with the small-diameter pulley portion 10b and closes the entire opening of the small-diameter pulley portion 10b. In the second example, although not shown, the cover 14 may also alternatively be distinct from the small-diameter pulley portion 10b and attached to an opening end of the small-diameter pulley portion 10b. A through hole (not shown) capable of preventing water or foreign substances from entering the small-diameter pulley portion 10b to some extent may be formed in the center of the small-diameter pulley portion 10b.

Since the cover 14 is provided on the opposite side (the front side) of the pulley 10 to the rotor 3 in this way, the opening of the small-diameter pulley portion 10b of the pulley 10 is closed. Therefore, in the second example, even if water splashes on the compressor 100, the cover 14 prevents the water from entering the pulley 10, and also prevents foreign substances such as contaminants and dust from entering the pulley 10.

In the second example, the pulley 10 and the rotor 3 are assembled by causing the through holes 15 formed in the coupling portion 10c of the pulley 10 to communicate with the screw holes 16 formed in the flange portion 3d of the rotor 3, inserting the bolts 17 from the front side, and screwing the bolts 17. Therefore, since the bolts 17 are attached from the front side, even if the bolts 17 drop off, the bolts 17 do not fly outward.

When the rotor 3 and the pulley 10 are assembled, a substantially L-shaped space is formed between the discharge passage 18 of the rotor 3 and an inner peripheral surface of the large-diameter pulley portion 10d. The space opens toward an outer peripheral side of the armature plate 4, and an opposite side (a rear side) of the space to the armature plate 4 is opened to the outside. Accordingly, abrasion powder generated due to sliding between the rotor 3 and the armature plate 4 that are engaged is discharged to the outside from a cutout portion 18b side.

In the second example, the case in which the discharge passage 18 is formed in the rotor 3 has been described as above and has been illustrated in FIGS. 7 and 9. Similar to the first example, the present invention is not limited thereto, being only limited by the scope of the claims and the discharge passage 18 may be formed in the pulley 10.

### Reference Signs List

1: electromagnetic clutch
2: bearing
3: rotor
3d: flange portion
4: armature plate
7: excitation coil
8: hub
10: pulley
10b: small-diameter pulley portion
10c: coupling portion
10d: large-diameter pulley portion
14: cover
17: bolt
18: discharge passage
100: compressor
106: drive shaft
200: belt

## Claims

1. An electromagnetic clutch (1) to be attached to a compressor (100), said electromagnetic clutch (1) comprising:
a rotor (3) to be rotatably supported by a housing (105) of the compressor (100);
a pulley (10) that receives a rotational force from a rotational force source via a belt (200) and that is relatively unrotatably coupled to the rotor (3) to rotate integrally with the rotor (3);
a hub (8) that is to be relatively unrotatably coupled to a drive shaft (106) of the compressor (100) and that rotates together with the drive shaft (106);
an armature plate (4) that is to be coupled to the hub (8) so that it should face a side end surface of the rotor (3) with a gap therebetween; and
an excitation coil (7) that is to be supported by the housing (105) of the compressor (100), that is accommodated in an inside of the rotor (3), and that generates an electromagnetic attraction force between the armature plate (4) and the rotor (3), wherein
the rotor (3) is distinct from the pulley (10),
the pulley (10) is attached to the rotor (3) on a front side of the electromagnetic clutch, **characterised in that**
the pulley (10) includes a small-diameter pulley portion (10b) protruding axially toward the front side of the electromagnetic clutch with respect to the armature plate (4), and
the small-diameter pulley portion (10b) is provided with a cover (14) at an opening of the small-diameter pulley portion (10b) on the front side of the electromagnetic clutch.

2. The electromagnetic clutch (1) according to claim 1, wherein
the pulley (10) includes a large-diameter pulley portion (10d) on an outer peripheral side of the rotor (3), the large-diameter pulley portion (10d) having a diameter larger than a diameter of the small-diameter pulley (10b).

3. The electromagnetic clutch (1) according to claim 1 or 2, wherein
the cover (14) is formed integrally with the pulley (10).

4. The electromagnetic clutch (1) according to any one of claims 1, 2, and 3, wherein
a discharge passage (18) is formed in a portion where the rotor (3) and the pulley (10) abut against each other.

## Patentansprüche

1. Elektromagnetische Kupplung (1) zur Befestigung an einem Kompressor (100), wobei die elektromagnetische Kupplung (1) umfasst:
einen Rotor (3), der drehbar durch ein Gehäuse (105) des Kompressors (100) gelagert werden soll;
eine Riemenscheibe (10), die eine Rotationskraft aus einer Rotationskraftquelle über einen Riemen (200) empfängt und die relativ undrehbar mit dem Rotor (3) gekoppelt ist, um sich integral mit dem Rotor (3) zu drehen;
eine Nabe (8), die relativ undrehbar mit einer Antriebswelle (106) des Kompressors (100) gekoppelt werden soll und die sich zusammen mit der Antriebswelle (106) dreht;
eine Ankerplatte (4), die mit der Nabe (8) so gekoppelt werden soll, dass sie einer Seitenendflache des Rotors (3) mit einem Spalt dazwischen gegenüberliegt; und
eine Erregerspule (7), die durch das Gehäuse (105) des Kompressors (100) getragen werden soll, die in einem Inneren des Rotors (3) untergebracht ist und die eine elektromagnetische Anziehungskraft zwischen der Ankerplatte (4) und dem Rotor (3) erzeugt, wobei
der Rotor (3) von der Riemenscheibe (10) getrennt ist, die Riemenscheibe (10) an der Vorderseite der elektromagnetischen Kupplung am Rotor (3) befestigt ist,
**dadurch gekennzeichnet, dass**
die Riemenscheibe (10) einen kleindurchmessrigen Riemenscheibenabschnitt (10b) aufweist, der axial zur Vorderseite der elektromagnetischen Kupplung in Bezug auf die Ankerplatte (4) vorsteht, und
der kleindurchmessrige Riemenscheibenabschnitt (10b) an einer Öffnung des kleindurchmessrigen Riemenscheibenabschnitts (10b) an der Vorderseite der elektromagnetischen Kupplung mit einer Abdeckung (14) versehen ist.

2. Elektromagnetische Kupplung (1) nach Anspruch 1, wobei
die Riemenscheibe (10) einen großdurchmessrigen Riemenscheibenabschnitt (10d) an einer äußeren Umfangsseite des Rotors (3) aufweist, wobei der großdurchmessrige Riemenscheibenabschnitt (10d) einen größeren Durchmesser als der kleindurchmessrige Riemenscheibenabschnitt (10b) hat.

3. Elektromagnetische Kupplung (1) nach Anspruch 1 oder 2, wobei
die Abdeckung (14) einstückig mit der Riemenscheibe (10) ausgebildet ist.

4. Elektromagnetische Kupplung (1) nach einem der Ansprüche 1, 2 und 3, wobei
ein Ablaufkanal (18) in einem Bereich ausgebildet ist, in dem der Rotor (3) und die Riemenscheibe (10) aneinander anliegen.

## Revendications

1. Embrayage électromagnétique (1) à fixer sur un compresseur (100), ledit embrayage électromagnétique (1) comprenant :
un rotor (3) destin.é à être supporté en rotation par un carter (105) du compresseur (100) ;
une poulie (10) qui reçoit une force de rotation d'une source de force de rotation par le biais d'une courroie (200) et qui est couplée de façon relativement non rotative au rotor (3) pour tourner de façon intégrée avec le rotor (3) ;
un moyeu (8) qui est destiné à être couplé de façon relativement non rotative à un arbre d'entraînement (106) du compresseur (100) et qui tourne conjointement à l'arbre d'entraînement (106) ;
une plaque d'armature (4) qui est destinée à être couplée au moyeu (8) de façon à faire face à une surface d'extrémité latérale du rotor (3) avec un espace entre eux ; et
une bobine d'excitation (7) qui est destinée à être supportée par le carter (105) du compresseur (100), qui est reçue dans un intérieur du rotor (3) et qui génère une force d'attraction électromagnétique entre la plaque d'armature (4) et le rotor (3), dans lequel
le rotor (3) est séparé de la poulie (10), la poulie (10) est fixée au rotor (3) sur un côté avant de l'embrayage électromagnétique, **caractérisé en ce que**
la poulie (10) comprend une partie de poulie de petit diamètre (10b) faisant saillie axialement vers le côté avant de l'embrayage électromagnétique par rapport à la plaque d'armature (4), et
la partie de poulie de petit diamètre (10b) est pourvue d'un couvercle (14) sur une ouverture de la partie de poulie de petit diamètre (10b) sur le côté avant de l'embrayage électromagnétique.

2. Embrayage électromagnétique (1) selon la revendication 1, dans lequel
la poulie (10) comprend une partie de poulie de grand diamètre (10d) sur un côté périphérique externe du rotor (3), la partie de poulie de grand diamètre (10d) présentant un diamètre supérieur à un diamètre de la partie de poulie de petit diamètre (10b).

3. Embrayage électromagnétique (1) selon la revendication 1 ou 2, dans lequel
le couvercle (14) est formé d'un seul tenant avec la poulie (10).

4. Embrayage électromagnétique (1) selon l'une quelconque des revendications 1, 2 et 3, dans lequel
un passage d'évacuation (18) est formé dans une partie où le rotor (3) et la poulie (10) viennent en butée l'un contre l'autre.
